# EUROPÄISCHE PATENTANMELDUNG

(11) **EP 4 803 925 A1**
(43) Veröffentlichungstag der Anmeldung: **09.09.2026**
(21) Anmeldenummer: 25161799.9
(22) Anmeldetag: 05.03.2025
(51) Int. Cl.: G01S 7/481, G01S 17/42, G02B 26/08, G02B 26/10

(54) **LIDAR-SENSOR**

(71) Anmelder: Universität Kassel (Körperschaft d. öffentlichen Rechts), 34125 Kassel (DE)
(72) Erfinder: BÖRCSÖK, Josef, 68753 Waghäusel (DE); HILLMER, Hartmut, 34128 Kassel (DE); TELAWI, Samer, 34125 Kassel (DE); MICHEL, Jakob, 34134 Kassel (DE)
(74) Vertreter: Walther Bayer Faber Patentanwälte PartGmbB

(57) **Zusammenfassung**

Gegenstand der Erfindung ist ein Lidar-Sensor (100), umfassend wenigstens ein Sendeelement zur Aussendung von Laserlicht (L), wenigstens eine Scaneinheit (1) zur Umlenkung des Laserlichts (L) in eine Betriebsumgebung des Lidar-Sensors (100), und wenigstens ein Empfangselement zur Detektion von in der Betriebsumgebung reflektiertem Laserlicht (L).

Erfindungsgemäß weist die Scaneinheit (1) wenigstens ein Spiegelelement (10) zur Umlenkung des Laserlichts (L) auf einem Grundkörper (20) aufweist, wobei das Spiegelelement (10) die folgenden Abschnitte umfasst:
- einen spiegelnden Blattabschnitt (11) mit zwei planparallelen Oberflächen,
- einen randseitigen Befestigungsabschnitt (12), der starr auf dem Grundkörper (20) angeordnet ist, und
- einen dazwischenliegenden Scharnierabschnitt (13), der eigenspannungsinduziert krümmbar ausgebildet ist, derart, dass der Blattabschnitt (11) in eine ausgelenkte Grundstellung schwenkbar ist,
wobei das Spiegelelement (10) eine Elektrode aufweist oder bildet, und wobei dem Spiegelelement (10) eine auf dem Grundkörper (20) angeordnete Elektrode (21) zugeordnet ist, derart, dass durch Anlegen einer elektrischen Spannung (U) zwischen den einander zugeordneten Elektroden der Blattabschnitt (11) ausgehend von der Grundstellung in eine Endstellung schwenkbar ist, in welcher der Blattabschnitt (11) im Wesentlichen planparallel zum Grundkörper (20) orientiert ist.

## Beschreibung

### STAND DER TECHNIK

Lidar-Sensoren (Light Detection and Ranging) dienen der elektro-optischen Fernerkundung, insbesondere um die Entfernung und Relativgeschwindigkeit zu Objekten der Betriebsumgebung zu bestimmen. Lidar-Sensoren basieren auf der Emission von Laserlicht in die Betriebsumgebung und dessen Detektion nach Reflektion, wobei insbesondere mittels Bestimmung der Laufzeit oder der Phasenlage des detektierten Laserlichts der Abstand zum reflektierenden Objekt ermittelt werden kann. Lidar-Sensoren finden in vielen Bereichen Anwendung, z. B. in der autonomen Fahrzeugtechnik, Robotik und Geomapping.

Eine im Stand der Technik gebräuchliche Ausführungsform stellen MEMS-Lidar dar (MEMS: Micro-Electro-Mechanical System), die zur Umlenkung des Laserlichts in die Betriebsumgebung millimetergroße Spiegel auf Halbleiterbasis verwenden. Die Spiegel sind typischerweise um eine oder zwei Hauptträgheitsachsen drehbar und werden in Resonanz betrieben, insbesondere bei Frequenzen im niedrigen kHz-Bereich, wobei je Drehachse Scanwinkelintervalle von bis zu etwa 60° gescannt werden können.

Beispielsweise offenbart die WO 2024/149646 A1 einen derartigen Mikroscanner für ein Lidar-Projektionssystem zur Projizierung von Lissajous-Figuren auf ein Beobachtungsfeld. Der Mikroscanner basiert auf polykristallinem Silizium und weist einen Spiegel, eine Tragestruktur und eine nicht-kardanische Aufhängung basierend auf Federanordnungen auf, die den Spiegel und die Tragestruktur beweglich miteinander verbindet, derart, dass eine Rotationsbewegung des Spiegels relativ zur Tragestruktur um zwei orthogonale Rotationsachsen ermöglicht ist.

### OFFENBARUNG DER ERFINDUNG

Es ist die Aufgabe der vorliegenden Erfindung, einen Lidar-Sensor basierend auf einer alternativ ausgebildeten Scaneinheit mit MEMS-Spiegel vorzuschlagen, wobei mit der Scaneinheit insbesondere ein besonders weites Scanwinkelintervall abtastbar sein soll.

Diese Aufgabe wird gelöst von einem Lidar-Sensor gemäß Anspruch 1. Vorteilhafte Weiterbildungen der Erfindung sind in den abhängigen Ansprüchen angegeben.

Die Erfindung setzt an einem Lidar-Sensor an, der wenigstens ein Sendeelement zur Aussendung von Laserlicht, wenigstens eine Scaneinheit zur Umlenkung des Laserlichts in die Betriebsumgebung des Lidar-Sensors, und wenigstens ein Empfangselement zur Detektion von in der Betriebsumgebung reflektiertem Laserlicht umfasst. Erfindungsgemäß weist die Scaneinheit wenigstens ein Spiegelelement zur Umlenkung des Laserlichts auf einem Grundkörper auf, wobei das Spiegelelement die folgenden Abschnitte umfasst:
- einen spiegelnden Blattabschnitt mit zwei planparallelen Oberflächen,
- einen randseitigen Befestigungsabschnitt, der starr auf dem Grundkörper angeordnet ist, und
- einen dazwischenliegenden Scharnierabschnitt, der eigenspannungsinduziert krümmbar ausgebildet ist, derart, dass der Blattabschnitt in eine ausgelenkte Grundstellung schwenkbar ist,
wobei das Spiegelelement eine Elektrode aufweist oder bildet, und wobei dem Spiegelelement eine auf dem Grundkörper angeordnete Elektrode zugeordnet ist, derart, dass durch Anlegen einer elektrischen Spannung zwischen den einander zugeordneten Elektroden der Blattabschnitt ausgehend von der Grundstellung in eine Endstellung schwenkbar ist, in welcher der Blattabschnitt im Wesentlichen planparallel zum Grundkörper orientiert ist.

Der Grundgedanke der Erfindung besteht darin, zur Lichtlenkung einen scharnierartig schwenkbaren Spiegel zu verwenden, der bauartbedingt einen signifikant weiteren Schwenkbereich aufweist als die im Stand der Technik gebräuchlichen Mikroscanner. Vorzugsweise ist das Spiegelelement derart ausgebildet, dass der Blattabschnitt zwischen der Grundstellung und der Endstellung ein Schwenkwinkelintervall von bis zu 135° überstreicht, sodass das mittels des Spiegelelements in die Betriebsumgebung umgelenkte Laserlicht ein Scanwinkelintervall von bis zu 270° überstreicht.

Zur Herstellung des Spiegelelements können gängige Dünnschichtverfahren angewandt werden, insbesondere unter Einsatz von Depositionsprozessen, Lithographie- und Ätzschritten sowie von Opferschichttechniken; detaillierte Angaben finden sich beispielsweise in Hillmer et al., Jpn. J. Appl. Phys. 57, 08PA07 (2018). Das Spiegelelement ist vorzugsweise als ein Dünnschichtverbund ausgebildet, wodurch die mechanischen Eigenspannungen abschnittsweise dediziert einstellbar sind. Beispielsweise weist das Spiegelelement eine auf dem Grundkörper angeordnete druckverspannte Schicht auf, sowie eine zugverspannte Schicht. Die Wirkung dieser Schichtkombination besteht in der beabsichtigten Krümmung des Spiegelelements entlang des Scharnierabschnitts, insbesondere um einen Aufrollwinkel von bis zu 135°. Entlang des Befestigungsabschnitts wird eine Krümmung durch die stoffschlüssige Verbindung zum Grundkörper verhindert, und der Blattabschnitt umfasst zusätzlich eine zugverspannte Kompensationsschicht, die derart ausgebildet ist, dass die Wechselwirkung aller effektiv wirksamen Eigenspannungen zu einer Planarisierung des Blattabschnitts führt und dort somit keine Krümmung auftritt. Der Dünnschichtverbund kann metallische Werkstoffe aufweisen, wodurch die Elektrode des Spiegelelements gebildet ist. Der Dünnschichtverbund kann insbesondere im Blattabschnitt weitere Schichten zur Ausbildung der gewünschten lichttechnischen Funktion aufweisen, beispielsweise eine dedizierte Spiegelschicht, etwa aus Aluminium, ein Schichtpaket zur Erhöhung der Reflektivität bei der Wellenlänge des verwendeten Laserlichts und/oder eine Verschleißschutzschicht.

Das Schwenken des Blattabschnitts in die Endstellung erfolgt elektrostatisch mittels Anlegens einer elektrischen Spannung, und das Schwenken in die Grundstellung wird durch die elastische Rückverformung des mechanisch vorgespannten Scharnierabschnitts bewirkt. Die Zeitdauer zum Schwenken des Blattabschnitts über das Scanwinkelintervall wird im Wesentlichen durch den elastischen Rückverformungsprozess festgelegt, wobei das prinzipiell schnellere Schwenken mittels elektrostatischer Aktuierung durch Anlegen eines zweckmäßigen Spannungssignals in seiner Dynamik steuerbar ist. Je nach detaillierter Ausbildung und Größe des Spiegelelements wird für das Schwenken über das gesamte Scanwinkelintervall eine Zeitdauer im Bereich von 50 µs bis 500 µs benötigt, sodass Bildraten von mehr als 2.000 fps erzielt werden können. Die Bauform des Spiegelelements erlaubt auch, das Scanwinkelintervall mittels der angelegten Spannungssignale beliebig einzuschränken und somit zumindest zeitweilig nur einen Teilbereich des Sensorbildfelds abzutasten. Die Kantenlängen des Blattabschnitts können fertigungsseitig einen weiten Längenbereich umfassen, insbesondere können die Kantenlängen im Bereich von 10 µm bis 1 mm liegen.

Der Lidar-Sensor umfasst eine Steuereinheit zur Steuerung der Scaneinheit, insbesondere zur Aktuierung des Spiegelelements mittels Anlegens von elektrischen Spannungssignalen über ein Adressierungsnetzwerk auf dem Grundkörper. Der Lidar-Sensor arbeitet vorzugsweise auf Basis einer Lichtlaufzeitbestimmung, wozu eine zweckmäßige Auswerteeinheit vorgesehen ist, ggfs. als integrierte Baugruppe mit der Steuereinheit.

In vorteilhafter Ausführungsform ist in der Betriebsumgebung reflektiertes Laserlicht mittels des Spiegelelements auf das Empfangselement umlenkbar. Das Laserlicht verläuft somit entlang desselben Hin- und Rückwegs, sodass das gesamte Scanwinkelintervall als aktives Sensorbildfeld (field-of-view) ausgenutzt werden kann. Zudem wird dadurch eine besonders kompakte Bauform des Lidar-Sensors unter Verzicht auf eine separate Optik für den Lichteinfang ermöglicht. Das Sendeelement und das Empfangselement sind in dieser Ausführungsform unmittelbar benachbart angeordnet, insbesondere auf einer gemeinsamen Leiterkarte, beispielsweise in Form einer Laserdiode und einer Photodiode, etwa einer Einzelphoton-Avalanche-Diode (SPAD).

In einer weiteren Ausführungsform umfasst die Scaneinheit eine Mehrzahl von Spiegelelementen, wobei die Spiegelelemente zum Scannen von jeweils unterschiedlichen Raumwinkelsegmenten angeordnet sind, insbesondere zur Umlenkung des Laserlichts unter jeweils unterschiedlichen Vertikalwinkeln. Beispielsweise sind die Spiegelelemente spaltenförmig übereinander angeordnet, wobei die Blattabschnitte insbesondere jeweils um zueinander kollinear orientierte Schwenkachsen schwenkbar sind. Beim Schwenken der Blattabschnitte erfolgt ein Scan in azimutaler Richtung. Insbesondere fällt das von dem wenigstens einen Sendeelement emittierte Laserlicht unter jeweils unterschiedlichen Vertikalwinkeln auf die Spiegelelemente ein, und wird unter jeweils unterschiedlichen Vertikalwinkeln in die Betriebsumgebung reflektiert. Die Gesamtheit der von den einzelnen Spiegelelementen abtastbaren Raumwinkelsegmenten ergibt das gesamte Sensorbildfeld.

Vorzugsweise umfasst der Lidar-Sensor eine der Anzahl an Spiegelelementen entsprechende Anzahl von Sendeelementen und/oder Empfangselementen, wobei jedes Sendeelement und/oder jedes Empfangselement einem Spiegelelement zugeordnet ist.

Beispielsweise umfasst der Lidar-Sensor zwei Scaneinheiten, wobei die Scaneinheiten zum Scannen von jeweils unterschiedlichen Raumwinkelsegmenten angeordnet sind, insbesondere derart, dass die Scanwinkelintervalle der Scaneinheiten azimutal um 180° zueinander versetzt sind. Damit kann insbesondere ein gesamtes Sensorbildfeld von 360° erzeugt werden.

### AUSFÜHRUNGSBEISPIELE DER ERFINDUNG

Weitere, die Erfindung verbessernde Maßnahmen werden nachstehend gemeinsam mit der Beschreibung von Ausführungsbeispielen der Erfindung anhand der Figuren näher dargestellt. Es zeigt in schematischer Form:
- Fig. 1:: ein erstes Ausführungsbeispiel des Lidar-Sensors,
- Fig. 2a-c:: eine Scaneinheit bei unterschiedlichen Spiegelstellungen,
- Fig. 3:: Darstellung der elektrostatischen Aktuierung,
- Fig. 4:: Darstellung der Eigenspannungen eines Spiegelelements
- Fig. 5a,b:: ein zweites Ausführungsbeispiel des Lidar-Sensors,
- Fig. 6:: ein drittes Ausführungsbeispiel, und
- Fig. 7:: ein viertes Ausführungsbeispiel.

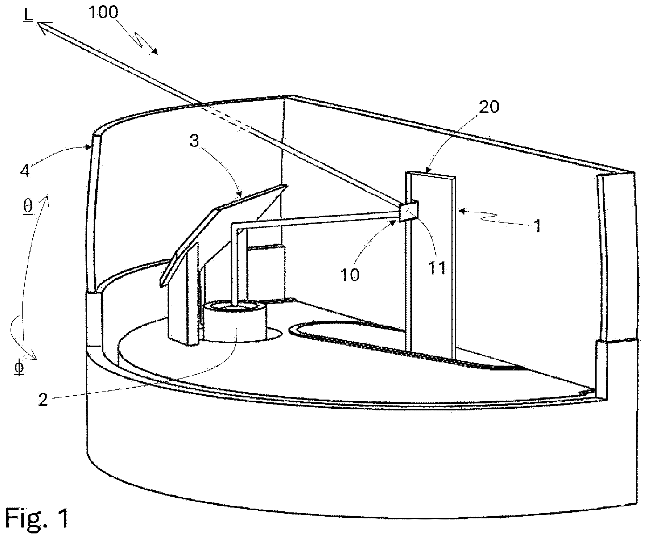

Fig. 1 zeigt ein erstes Ausführungsbeispiel des erfindungsgemäßen Lidar-Sensors 100 mit der Scaneinheit 1 zur Umlenkung des Laserlichts L in die Betriebsumgebung des Lidar-Sensors 100, wozu die Scaneinheit 1 das Spiegelelement 10 auf dem Grundkörper 20 aufweist. Die Sende-Empfangseinheit 2 umfasst ein Sendeelement zur Aussendung des Laserlichts L und ein Empfangselement zur Detektion von in der Betriebsumgebung reflektiertem und mittels des Spiegelelements 10 umgelenktem Laserlicht. Der Lichtweg des in die Betriebsumgebung ausgesendeten und dort reflektierten Laserlichts L ist somit auf Hin- und Rückweg im Wesentlichen identisch.

Weiterhin ist der über der Sende-Empfangseinheit 2 angeordnete starre Spiegel 3 in den Lichtweg des Laserlichts L eingebunden. Der Spiegel 3 ist derart orientiert, dass der Lichtweg zwischen dem Spiegel 3 und dem Spiegelelement 10 gegen die Horizontale geneigt ist, sodass der weitere Lichtweg zwischen dem Spiegelelement 10 und der Betriebsumgebung unter einem solchen Vertikalwinkel θ verläuft, dass der Spiegel 3 unterhalb des scanbaren Raumwinkelsegments liegt und nicht zu einer Abschattung führt. Die Abdeckscheibe 4 (nur abschnittsweise dargestellt) ist transparent für das verwendete Laserlicht L, dessen Wellenlänge typischerweise im Nahen Infrarot liegt.

Das Spiegelelement 10 umfasst den spiegelnden Blattabschnitt 11 mit zwei planparallelen Oberflächen, der zur Umlenkung des Laserlichts L dient. Der Blattabschnitt 11 ist in Fig. 1 in seiner vollständig ausgelenkten Grundstellung dargestellt, in welcher der Blattabschnitt 11 hier beispielhaft etwa im rechten Winkel vom Grundkörper 20 abragt. Der Blattabschnitt 11 ist mittels elektrostatischer Kraft in eine Endstellung schwenkbar, in welcher der Blattabschnitt 11 im Wesentlichen planparallel zum Grundkörper 20 orientiert ist. Aus Gründen der Übersichtlichkeit sind die Mittel zur elektrostatischen Aktuierung in der Fig. 1 nicht dargestellt. Beim Schwenken des Blattabschnitts 11 in Richtung seiner Endstellung variiert der Azimutwinkel ϕ unter dem das Laserlicht L in die Betriebsumgebung ausgesendet wird, wobei der Vertikalwinkel θ unverändert bleibt. Das gesamte azimutale Scanwinkelintervall der Scaneinheit 1 beträgt im vorliegenden Ausführungsbeispiel etwa 180° und das abgetastete Raumwinkelsegment bildet einen dementsprechenden Abschnitt einer Kugelzone.

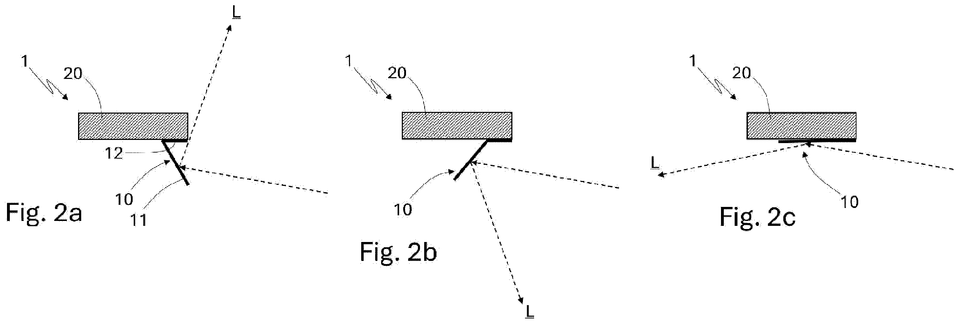

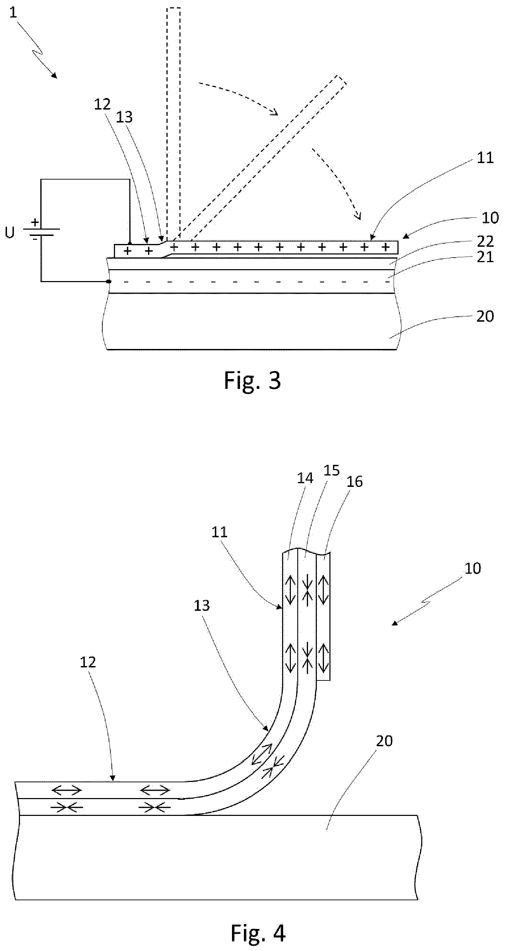

Fig. 2a-c zeigen schematische Draufsichten auf eine Scaneinheit 1 eines erfindungsgemäßen Lidar-Sensors bei unterschiedlichen Stellungen des Blattabschnitts 11 des Spiegelelements 10. Das Spiegelelement 1 umfasst den randseitigen Befestigungsabschnitt 12, der starr auf dem Grundkörper 20 angeordnet ist. Der zwischen dem Befestigungsabschnitt 12 und dem Blattabschnitt 11 verlaufende Scharnierabschnitt ist aus Gründen der Übersichtlichkeit nicht dargestellt, ebenso wenig die Elektroden und sonstigen Mittel zur elektrostatischen Aktuierung (siehe hierzu Fig. 3 und Fig. 4).

Fig. 2a zeigt den Blattabschnitt 11 in der Grundstellung, die ohne elektrostatische Aktuierung aufgrund der eigenspannungsinduzierten Krümmung im Scharnierabschnitt eingenommen wird. Der Blattabschnitt 11 und der Befestigungsabschnitt 12 schließen dabei beispielhaft einen Winkel von 60° ein, und das von dem (nicht dargestellten) Sendeelement auf den Blattabschnitt 11 eingestrahlte Laserlicht L wird in die obere Hälfte der Figurenebene umgelenkt. Mittels elektrostatischer Aktuierung wird der Blattabschnitt 11 aus der Grundstellung in Richtung auf den Grundkörper verschwenkt und durchläuft dabei die in Fig. 2b dargestellte Zwischenstellung, bis dass die in Fig. 2c dargestellte Endstellung eingenommen wird, in welcher der Blattabschnitt 11 im Wesentlichen planparallel am Grundkörper 20 anliegt. Zwischen der Grund- und der Endstellung überstreicht der Blattabschnitt hier beispielhaft ein Schwenkwinkelintervall von 120°, sodass das in die Betriebsumgebung umgelenkte Laserlicht L ein Scanwinkelintervall von 240° überstreicht. Die zwischen der Grundstellung und der Endstellung liegenden Zwischenstellungen können beispielsweise im Zuge eines vollständigen Scans transient durchlaufen werden. Prinzipiell kann jede Zwischenstellung durch zweckmäßige Aktuierung auch gezielt angesteuert und stationär eingenommen werden. Somit kann das von der Scaneinheit 1 abgetastete Raumwinkelsegment bei Bedarf beliebig verkleinert werden.

Zur Darstellung des elektrostatischen Aktuierungsprinzips zeigt Fig. 3 eine schematische Schnittansicht einer Scaneinheit 1 eines erfindungsgemäßen Lidar-Sensors. Das Spiegelelement 10 bildet eine Elektrode und weist zu diesem Zweck einen elektrisch leitfähigen Werkstoff auf. Auf dem Grundkörper 20 sind die Elektrode 21 in Form einer elektrisch leitfähigen Schicht sowie die elektrisch isolierende Isolationsschicht 22 angeordnet.

Das Spiegelelement 10 ist mit dem Befestigungsabschnitt 12 stoffschlüssig auf der Isolationsschicht 22 angeordnet und über eine Krümmung seines Scharnierabschnitts 13 vollzieht sich die Schwenkbewegung des Blattabschnitts 11. In dem dargestellten Zustand ist zwischen dem Spiegelelement 10 und der Elektrode 21 eine elektrische Spannung U angelegt, sodass eine elektrostatische Anziehung zwischen der Elektrode 21 und dem Spiegelelement 10 zu einem Schwenken des Blattabschnitts 11 in die dargestellte Endstellung führt, in welcher der Blattabschnitt 11 planparallel zum Grundkörper 20 orientiert ist. Strichliert dargestellt sind zwei ausgelenkte Stellungen des Blattabschnitts 11: die orthogonal zum Grundkörper 20 orientierte Grundstellung, sowie eine Zwischenstellung, in welcher ein Winkel von 45° zwischen dem Blattabschnitt 11 und dem Grundkörper 20 vorliegt. Die Grundstellung wird eingenommen, wenn das Spiegelelement 10 und die Elektrode 21 auf demselben elektrischen Potential liegen, und in der Zwischenstellung liegt eine im Vergleich zur Endstellung geringere Spannung U an. Durch geeignete Variation der angelegten Spannung U kann eine Vielzahl an Zwischenstellungen mit unterschiedlichen Winkeln des Blattabschnitts 11 gegenüber dem Grundkörper 20 eingestellt werden.

Fig. 4 zeigt eine schematische Schnittansicht zur Darstellung der Eigenspannungen des Spiegelelements 10. Zum Zwecke der Übersichtlichkeit sind die zur elektrostatischen Aktuierung notwendigen Schichten auf dem Grundköper 20 nicht dargestellt. Das Spiegelelement 10 weist eine auf dem Grundkörper 20 angeordnete druckverspannte Schicht 15 auf, sowie eine zugverspannte Schicht 14. Die Wirkung dieser Eigenspannungen besteht in der dargestellten Krümmung des Spiegelelements 10 entlang des Scharnierabschnitts 13, hier beispielhaft um einen Aufrollwinkel von 90°. Entlang des Befestigungsabschnitts 12 wird diese Krümmung durch die stoffschlüssige Verbindung zum Grundkörper 20 verhindert und entlang des Blattabschnitts 11 sorgt die zugverspannte Kompensationsschicht 16 dafür, dass die globale, d.h., effektiv wirksame Eigenspannung im Blattabschnitt 11 verschwindet und dort somit keine Krümmung auftritt. Die dargestellten Schichten 14, 15 und 16 können beispielsweise in ihrer Gesamtheit die Elektrode des Spiegelelements 10 bilden, sowie eine ausreichende Spiegelwirkung aufweisen. Alternativ kann eine dedizierte Verspiegelung des Blattabschnitts 11 durch eine zusätzliche Spiegelschicht und/oder einen Schichtstapel zur weiteren Erhöhung der Reflektivität erzeugt werden (nicht dargestellt).

Insbesondere bei Verwendung von Methoden der Gasphasenabscheidung zur Deposition (PVD, CVD) sind üblicherweise sämtliche Schichten verspannt, d.h., beispielweise auch eine zusätzliche Spiegelschicht auf dem Blattabschnitt 11. In diesem Fall wird zweckmäßigerweise die Gesamtschichtfolge zur Kompensation der mechanischen Spannungen im planaren Blattabschnitt 11 ausgelegt. Zur globalen Spannungskompensation im Blattabschnitt 11 sind prinzipiell bereits zwei unterschiedliche Schichten ausreichend, wobei hinsichtlich der Gestaltungsfreiheit betreffend die Funktionalität und die Dimensionen des Spiegelelements10 vorteilhafterweise jedoch mehr als zwei Schichten verwendet werden sollten.

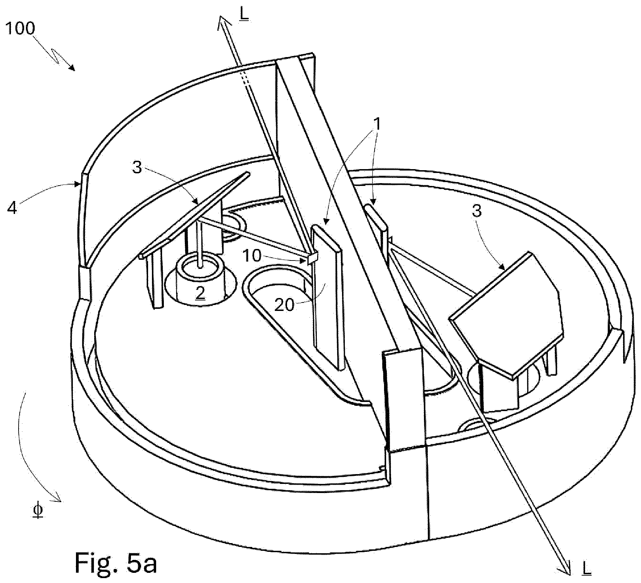

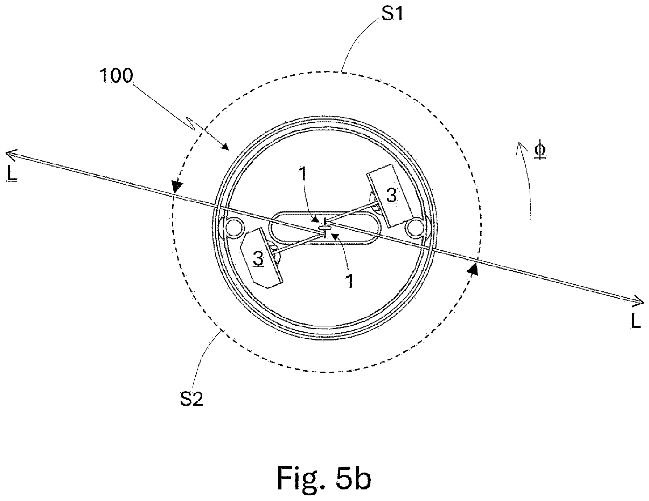

Fig. 5a und Fig. 5b zeigen schematisch ein zweites Ausführungsbeispiel des erfindungsgemäßen Lidar-Sensors 100 in perspektivischer Ansicht bzw. in Draufsicht. Der Lidar-Sensor 100 umfasst zwei Scaneinheiten 1, wobei die Scaneinheiten 1 zum Scannen von jeweils unterschiedlichen Raumwinkelsegmenten angeordnet sind, derart, dass die Scanwinkelintervalle S1, S2 der Scaneinheiten 1 azimutal um 180° zueinander versetzt sind. Dieses zweite Ausführungsbeispiel ist modular aus zwei Aufbauten gemäß des ersten Ausführungsbeispiels (siehe Fig. 1) zusammengesetzt, d.h., jeder Scaneinheit 1 ist eine Sende-Empfangseinheit 2 und ein Spiegel 3 zugeordnet. Jede Scaneinheit 1 ist zum Scannen eines Scanwinkelintervalls S1, S2 von jeweils 180° ausgebildet, woraus sich in Summe für den Lidar-Sensor 100 ein gesamtes Scanwinkelintervall von 360° im Azimutwinkel ϕ ergibt.

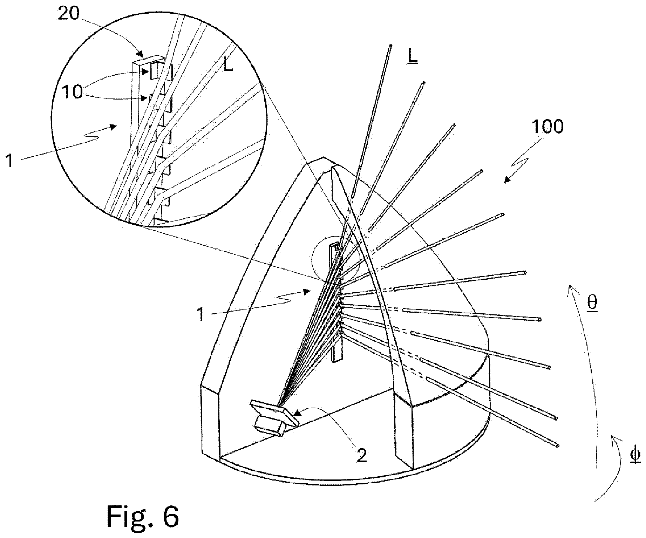

Fig. 6 zeigt eine schematische Ansicht nebst vergrößertem Detail eines dritten Ausführungsbeispiels des erfindungsgemäßen Lidar-Sensors 100, bei dem die Scaneinheit 1 eine Mehrzahl von Spiegelelementen 10 umfasst, die zum Scannen von jeweils unterschiedlichen Raumwinkelsegmenten angeordnet sind, nämlich zur Umlenkung des Laserlichts L unter jeweils unterschiedlichen Vertikalwinkeln θ. Die Sende-Empfangseinheit 2 umfasst eine der Anzahl an Spiegelelementen 10 entsprechende Anzahl von Sendeelementen und Empfangselementen. Jedem Spiegelelement 10 ist ein Paar aus einem Sende- und einem Empfangselement zugeordnet, und der Lichtweg des Laserlichts L zwischen dem Sendeelement und dem Empfangselement verläuft auf Hin- und Rückweg über das jeweils zugeordnete Spiegelelement 10. Die Sende-Empfangseinheit 2 ist relativ zur Scaneinheit 1 derart angeordnet, dass das von den Sendeelementen emittierte Laserlicht L unter jeweils unterschiedlichen Vertikalwinkeln θ auf die Spiegelelemente 10 einfällt. Die Spiegelelemente 10 sind spaltenförmig übereinander angeordnet, derart, dass die Schwenkachsen, um die die Blattabschnitte jeweils schwenkbar sind, kollinear zueinander orientiert sind. Beim vollständigen Schwenken der Blattabschnitte überstreichen die in die Betriebsumgebung umgelenkten Strahlen des Laserlichts L jeweils ein Scanwinkelintervall von 180° in Richtung des Azimutwinkels ϕ unter konstanten, jedoch voneinander verschiedenen Vertikalwinkeln θ. Das gesamte Sensorbildfeld des Lidar-Sensors 100 entspricht einem Raumwinkelsegment von knapp π sr, d.h., von knapp einem Viertel einer Kugeloberfläche.

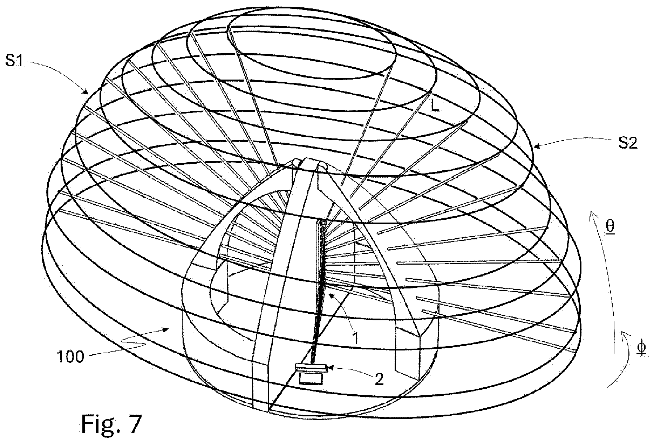

Fig. 7 zeigt eine schematische Ansicht eines vierten Ausführungsbeispiels des erfindungsgemäßen Lidar-Sensors 100. Der Lidar-Sensor 100 umfasst zwei Scaneinheiten 1, wobei die Scaneinheiten 1 zum Scannen von jeweils unterschiedlichen Raumwinkelsegmenten angeordnet sind, derart, dass die Scanwinkelintervalle S1, S2 der Scaneinheiten 1 azimutal um 180° zueinander versetzt sind. Dieses vierte Ausführungsbeispiel ist modular aus zwei Aufbauten gemäß des dritten Ausführungsbeispiels (siehe Fig. 6) zusammengesetzt, d.h., jeder Scaneinheit 1 ist eine Sende-Empfangseinheit 2 mit einer der Anzahl an Spiegelelementen entsprechenden Anzahl an Sende- und Empfangselementen zugeordnet. Jede Scaneinheit 1 ist zum Scannen eines Scanwinkelintervalls S1, S2 von jeweils 180° um den Azimutwinkel ϕ und knapp 90° um den Vertikalwinkel θ ausgebildet, woraus sich in Summe für den Lidar-Sensor 100 ein gesamtes Sensorbildfeld von knapp 2π sr, d.h., von knapp einer Halbkugeloberfläche ergibt.

### Bezugszeichenliste:

- 100: Lidar-Sensor
- 1: Scaneinheit
- 10: Spiegelelement
- 11: Blattabschnitt
- 12: Befestigungsabschnitt
- 13: Scharnierabschnitt
- 14: druckverspannte Schicht
- 15: zugverspannte Schicht
- 16: Kompensationsschicht
- 20: Grundkörper
- 21: Elektrode
- 22: Isolationsschicht
- 2: Sende-Empfangseinheit
- 3: Spiegel
- 4: Abdeckscheibe
- L: Laserlicht
- S1, S2: Scanwinkelintervall
- U: elektrische Spannung
- θ: Vertikalwinkel
- ϕ: Azimutwinkel

## Patentansprüche

1. Lidar-Sensor (100), umfassend wenigstens ein Sendeelement zur Aussendung von Laserlicht (L), wenigstens eine Scaneinheit (1) zur Umlenkung des Laserlichts (L) in eine Betriebsumgebung des Lidar-Sensors (100), und wenigstens ein Empfangselement zur Detektion von in der Betriebsumgebung reflektiertem Laserlicht (L),
**dadurch gekennzeichnet,**
**dass** die Scaneinheit (1) wenigstens ein Spiegelelement (10) zur Umlenkung des Laserlichts (L) auf einem Grundkörper (20) aufweist, wobei das Spiegelelement (10) die folgenden Abschnitte umfasst:
- einen spiegelnden Blattabschnitt (11) mit zwei planparallelen Oberflächen,
- einen randseitigen Befestigungsabschnitt (12), der starr auf dem Grundkörper (20) angeordnet ist, und
- einen dazwischenliegenden Scharnierabschnitt (13), der eigenspannungsinduziert krümmbar ausgebildet ist, derart, dass der Blattabschnitt (11) in eine ausgelenkte Grundstellung schwenkbar ist,
wobei das Spiegelelement (10) eine Elektrode aufweist oder bildet, und wobei dem Spiegelelement (10) eine auf dem Grundkörper (20) angeordnete Elektrode (21) zugeordnet ist, derart, dass durch Anlegen einer elektrischen Spannung (U) zwischen den einander zugeordneten Elektroden der Blattabschnitt (11) ausgehend von der Grundstellung in eine Endstellung schwenkbar ist, in welcher der Blattabschnitt (11) im Wesentlichen planparallel zum Grundkörper (20) orientiert ist.

2. Lidar-Sensor (100) nach Anspruch 1,
**dadurch gekennzeichnet,**
**dass** der Blattabschnitt (11) zwischen der Grundstellung und der Endstellung ein Schwenkwinkelintervall von bis zu 135° überstreicht, sodass das mittels des Spiegelelements (1) in die Betriebsumgebung umgelenkte Laserlicht (L) ein Scanwinkelintervall (S) von bis zu 270° überstreicht.

3. Lidar-Sensor (100) nach Anspruch 1 oder 2,
**dadurch gekennzeichnet,**
**dass** in der Betriebsumgebung reflektiertes Laserlicht (L) mittels des Spiegelelements (10) auf das Empfangselement umlenkbar ist.

4. Lidar-Sensor (100) nach einem der vorgenannten Ansprüche,
**dadurch gekennzeichnet,**
**dass** die Scaneinheit (1) eine Mehrzahl von Spiegelelementen (10) umfasst, wobei die Spiegelelemente (10) zum Scannen von jeweils unterschiedlichen Raumwinkelsegmenten angeordnet sind, insbesondere zur Umlenkung des Laserlichts (L) unter jeweils unterschiedlichen Vertikalwinkeln (θ).

5. Lidar-Sensor (100) nach Anspruch 4,
**dadurch gekennzeichnet,**
**dass** die Spiegelelemente (10) spaltenförmig übereinander angeordnet sind, wobei die Blattabschnitte (11) insbesondere jeweils um zueinander kollinear orientierte Schwenkachsen schwenkbar sind.

6. Lidar-Sensor (100) nach Anspruch 4 oder 5,
**dadurch gekennzeichnet,**
**dass** das von dem wenigstens einen Sendeelement emittierte Laserlicht (L) unter jeweils unterschiedlichen Vertikalwinkeln (θ) auf die Spiegelelemente (10) einfällt.

7. Lidar-Sensor (100) nach einem der Ansprüche 4 bis 6,
**dadurch gekennzeichnet,**
**dass** der Lidar-Sensor (100) eine der Anzahl an Spiegelelementen (10) entsprechende Anzahl von Sendeelementen und/oder Empfangselementen umfasst, wobei jedes Sendeelement und/oder jedes Empfangselement einem Spiegelelement (10) zugeordnet ist.

8. Lidar-Sensor (100) nach einem der vorgenannten Ansprüche,
**dadurch gekennzeichnet,**
**dass** der Lidar-Sensor (100) zwei Scaneinheiten (1) umfasst, wobei die Scaneinheiten (1) zum Scannen von jeweils unterschiedlichen Raumwinkelsegmenten angeordnet sind, insbesondere derart, dass die Scanwinkelintervalle (S1, S2) der Scaneinheiten (1) azimutal um 180° zueinander versetzt sind.

## Geänderte Patentansprüche

### Geänderte Patentansprüche gemäss Regel 137(2) EPÜ.

1. Lidar-Sensor (100), umfassend wenigstens ein Sendeelement zur Aussendung von Laserlicht (L), wenigstens eine Scaneinheit (1) zur Umlenkung des Laserlichts (L) in eine Betriebsumgebung des Lidar-Sensors (100), und wenigstens ein Empfangselement zur Detektion von in der Betriebsumgebung reflektiertem Laserlicht (L),
**dadurch gekennzeichnet,**
**dass** die Scaneinheit (1) eine Mehrzahl von Spiegelelementen (10) zur Umlenkung des Laserlichts (L) auf einem Grundkörper (20) aufweist, wobei jedes Spiegelelement (10) die folgenden Abschnitte umfasst:
- einen spiegelnden Blattabschnitt (11) mit zwei planparallelen Oberflächen,
- einen randseitigen Befestigungsabschnitt (12), der starr auf dem Grundkörper (20) angeordnet ist, und
- einen dazwischenliegenden Scharnierabschnitt (13), der eigenspannungsinduziert krümmbar ausgebildet ist, derart, dass der Blattabschnitt (11) in eine ausgelenkte Grundstellung schwenkbar ist,
wobei jedes Spiegelelement (10) eine Elektrode aufweist oder bildet, und wobei jedem Spiegelelement (10) eine auf dem Grundkörper (20) angeordnete Elektrode (21) zugeordnet ist, derart, dass durch Anlegen einer elektrischen Spannung (U) zwischen den einander zugeordneten Elektroden der jeweilige Blattabschnitt (11) ausgehend von der Grundstellung in eine Endstellung schwenkbar ist, in welcher der Blattabschnitt (11) im Wesentlichen planparallel zum Grundkörper (20) orientiert ist, wobei die Spiegelelemente (10) spaltenförmig übereinander angeordnet sind, wobei die Blattabschnitte (11) jeweils um zueinander kollinear orientierte Schwenkachsen schwenkbar sind und das von dem wenigstens einen Sendeelement emittierte Laserlicht (L) unter jeweils unterschiedlichen Vertikalwinkeln (θ) auf die Spiegelelemente (10) einfällt, sodass die Spiegelelemente (10) zum Scannen von jeweils unterschiedlichen Raumwinkelsegmenten angeordnet sind, nämlich zur Umlenkung des Laserlichts (L) unter jeweils unterschiedlichen Vertikalwinkeln (θ), wobei beim Schwenken der Blattabschnitte (11) jeweils ein Scan in azimutaler Richtung (ϕ) erfolgt.

2. Lidar-Sensor (100) nach Anspruch 1,
**dadurch gekennzeichnet,**
**dass** der Blattabschnitt (11) jedes Spiegelelements (1) zwischen der Grundstellung und der Endstellung ein Schwenkwinkelintervall von bis zu 135° überstreicht, sodass das mittels jedes Spiegelelements (1) in die Betriebsumgebung umgelenkte Laserlicht (L) ein Scanwinkelintervall (S) von bis zu 270° überstreicht.

3. Lidar-Sensor (100) nach Anspruch 1 oder 2,
**dadurch gekennzeichnet,**
**dass** in der Betriebsumgebung reflektiertes Laserlicht (L) mittels jedes Spiegelelements (10) auf das Empfangselement umlenkbar ist.

4. Lidar-Sensor (100) nach einem der vorgenannten Ansprüche,
**dadurch gekennzeichnet,**
**dass** der Lidar-Sensor (100) eine der Anzahl an Spiegelelementen (10) entsprechende Anzahl von Sendeelementen und/oder Empfangselementen umfasst, wobei jedes Sendeelement und/oder jedes Empfangselement einem Spiegelelement (10) zugeordnet ist.

5. Lidar-Sensor (100) nach einem der vorgenannten Ansprüche,
**dadurch gekennzeichnet,**
**dass** der Lidar-Sensor (100) zwei Scaneinheiten (1) umfasst, wobei die Scaneinheiten (1) zum Scannen von jeweils unterschiedlichen Raumwinkelsegmenten angeordnet sind, insbesondere derart, dass die Scanwinkelintervalle (S1, S2) der Scaneinheiten (1) azimutal um 180° zueinander versetzt sind.
